(19) Europäisches Patentamt
European Patent Office
Office européen des brevets

(11) **EP 1 776 796 B1**

(12) **EUROPEAN PATENT SPECIFICATION**

(45) Date of publication and mention
of the grant of the patent:
**11.04.2012 Bulletin 2012/15**

(51) Int Cl.:
*H04B 1/707* (2011.01)      *H04L 27/26* (2006.01)
*H04B 1/7087* (2011.01)

(21) Application number: **05771422.2**

(22) Date of filing: **13.08.2005**

(86) International application number:
**PCT/SG2005/000273**

(87) International publication number:
**WO 2006/016856 (16.02.2006 Gazette 2006/07)**

(54) **METHOD AND SYSTEM FOR DETERMINING A FREQUENCY OFFSET**

VERFAHREN UND SYSTEM ZUR BESTIMMUNG EINES FREQUENZOFFSETS

PROCEDE ET SYSTEME POUR LA DETERMINATION DE DECALAGE DE FREQUENCE

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.08.2004 US 601331 P**

(43) Date of publication of application:
**25.04.2007 Bulletin 2007/17**

(73) Proprietor: **Agency for Science, Technology and Research**
**Singapore 138668 (SG)**

(72) Inventors:
• **FUNG, Ho Wang**
**Singapore 119613 (SG)**
• **HO, Chin Keong**
**Singapore 119613 (SG)**

(74) Representative: **Viering, Jentschura & Partner**
**Postfach 22 14 43**
**80504 München (DE)**

(56) References cited:
**EP-A2- 1 195 961      GB-A- 2 359 456**
**US-A- 5 001 747      US-A1- 2004 004 934**

• **MORELLI, M. AND MENGALI, U.: "Carrier-frequency estimation for transmissions over selective channels", IEEE TRANSACTIONS ON COMMUNICATIONS, vol. 48, no. 9, 1 September 2000 (2000-09-01), pages 1580-1589, XP002615281, ISSN: 0090-6778**

**Description**

Field of the invention

The invention relates to a method and system for determining a frequency offset.

Background of the invention

In practical data communication, the local oscillator frequency at a receiver is typically not identical to that of the signal carrier generated at a transmitter. This is for one due to circuit limitation and it arises when the receiver is in relative motion to the transmitter as Doppler shift is inevitably introduced to the carrier frequency.

A frequency offset may lead to inter-carrier interference (ICI). For a multicarrier system, such as one that adopts orthogonal frequency division multiplexing (OFDM), a residual frequency offset results in a significant performance degradation. There hence exists the need for carrier frequency offset estimation so that this effect can be compensated for - see Morelli M., Mengali U, Carrier-Frequency Estimation for Transmissions over Selective Channels, IEEE Transactions on Communications, Vol. 48, No. 9 pp. 1580-1589, Sept. 2000. A number of transmission formats, for example, the

IEEE802.11a standard, among others for signal transmission over selective channels require that pilot symbols in the form of short preambles be delivered ahead of the data samples to allow the carrier frequency offset to be estimated by the receiver. Various approaches have been propounded for the purpose. Although the maximum likelihood estimation (MLE) solution has been formulated in [1], [2], [3], it involves an optimization search that is usually too computationally demanding for practical implementation. Other designs that maintain the Cramer-Rao bound (CRB) performance but with lower computational consumption have also been reported (see [2], [3]). In this regard, the ad hoc estimator (AHE) developed in [2] serves as an attractive candidate.

Consider the case that $P_s$ identical short preambles, each of L symbols in length, denoted as $x_{\tau+kT_b} = x_\tau$, $0 \le \tau \le LT_b$, $T_b$ being the bit interval and $0 \le k \le P_s - 1$ an integer, are sent prior to the data stream in a data packet. For the IEEE802.11a specification, for instance, $P_s=10$ and L=16. After transmission through the channel, the $P_s$ short preambles become $z_t = a_t + \tilde{v}_t$, where

$$a_t = \int_{-\infty}^{\infty} h_{t-\alpha} x_\alpha d\alpha$$

$$= \int_{-\infty}^{\infty} h_{(t+LkTs)-(\alpha+LkTs)} x_{\alpha+LkT_b} d\alpha$$

$$= a_{t+LkT_b}$$

is periodic for $LT_b \le t \le 2LT_b$, with the assumption that the maximum delay spread of the channel is less than the duration of one short preamble $LT_b$ and $h_t$ is the channel gain and $\tilde{v}_t$ is additive white gaussian noise (AWGN) of variance $\sigma^2$. The difference in the frequency of the local receiver oscillator from that of the carrier is reflected in the received short preambles $y_t = z_t e^{j\Delta\beta t}$ as an offset of $\Delta\beta$, where $-2\pi \cdot 0.5 \le \Delta\beta \le 2\pi \cdot 0.5$. Since the first short preamble is corrupted by intersymbol interference and has to be disposed of, and some of the remaining ones are reserved for other purposes such as timing synchronization, it is supposed that only $P < P_s$ received short preambles are available for frequency offset estimation. Then after sampling $y_t$ at $t=(n+1)T_b$, the PL discrete values $y_n$ can be expressed in matrix form as

$$\underline{Y} = \underline{b}\underline{a}^H + \underline{V},$$

where

$$\underline{Y} \triangleq \begin{bmatrix} y_0 & y_1 & \cdots & y_{L-1} \\ y_L & y_{L+1} & \cdots & y_{2L-1} \\ \vdots & \vdots & \ddots & \vdots \\ y_{(P-1)} & y_{(P-1)L+1} & \cdots & y_{PL-1} \end{bmatrix}$$

$$\underline{b} \ \Box \ \begin{bmatrix} 1 \\ e^{j\omega} \\ \vdots \\ e^{j\omega(P-1)} \end{bmatrix}$$

$$\omega \ \Box \ L\Delta\beta$$

$$a^H \ \Box \ \begin{bmatrix} a_0 & a_1 e^{j\Delta\beta} & \cdots & a_{L-1} e^{j\Delta\beta(L-1)} \end{bmatrix}$$

$$\underline{V} \ \Box \ \begin{bmatrix} v_0 & v_1 & \cdots & v_{L-1} \\ v_L & v_{L+1} & \cdots & v_{2L-1} \\ \vdots & \vdots & \ddots & \vdots \\ v_{(P-1)L} & v_{(P-1)L+1} & \cdots & v_{PL-1} \end{bmatrix}$$

with $v_n = \tilde{v}_n e^{j\Delta\beta n}$ (n= 0, 1, ..., PL-1) sharing the same statistical properties with $\tilde{v}_n$, and can therefore be equivalently regarded as AWGN. The carrier frequency offset estimation (FOE) problem is now reduced to that of the estimation of $\omega$, or rather $\Delta\beta$, given $\underline{Y}$.

One method for estimating $\Delta\beta$ is to perform a maximum likelihood estimation (MLE). It involves locating the peak of the periodogram of a one-dimensional correlation function of the received samples through a coarse search and subsequently a fine search. The Cramer-Rao bound (CRB), which marks the lowest achievable variance of an unbiased estimate, can be achieved above a certain thresholding signal-to-noise ratio (SNR).

Since every element in $\underline{V}$ is an independently Gaussian distributed variable, the maximum likelihood estimate of $\omega$ minimizes the cost function

$$J_0 \ = \ \text{trace}(\underline{V}^H \underline{V})$$

and is attained when $\underline{a}^H$ is estimated as $\underline{\hat{a}}^H = (\underline{b}^H \underline{b})^{-1} \underline{b}^H \underline{Y}$ and

$$J_1 \ = \ \text{trace} \left\{ \underline{Y}^H \underline{b} (\underline{b}^H \underline{b})^{-1} \underline{b}^H \underline{Y} \right\}$$

$$= \ \frac{\text{trace}(\underline{b}^H \underline{Y} \underline{Y}^H \underline{b})}{P}$$

$$= \ \frac{c_0 + 2\Re(\sum_{k=1}^{P-1} c_k e^{-j\omega k})}{P}$$

is maximized, with

$$c_k \approx \sum_{i=k}^{P-1} \left[ YY^H \right]_{i,i-k,} \qquad k = 0, 1, \ldots, P-1$$

being a measure of the correlation among the received samples, to yield

$$\hat{\omega} = \arg_{\omega} \max \Re \left( \sum_{k=1}^{P-1} c_k e^{-j\omega k} \right)$$

The denotation $[YY^H]_{i,j}$, i,j=0,1,...,P-1 represents the (i,j)-th element of the matrix $YY^H$ and $\Re(.)$ the real component of the associated complex argument. An alternative approach to the above formulation can be found in [2]. Apart from the Fast Fourier transform (FFT) as adopted in [2], the above equation for $\hat{\omega}$ can be solved for using the Gauss-Newton method through the iteration equation

$$\hat{\omega}_{i+1} = \hat{\omega}_i + \frac{\displaystyle\sum_{k=1}^{P-1} k\Im(c_k e^{-j\hat{\omega}_i k})}{\displaystyle\sum_{k=1}^{P-1} k^2\Re(c_k e^{-j\hat{\omega}_i k})}$$

and an initial estimate $\hat{\omega}_0$, with $\Re(.)$ and $\Im(.)$ to denote the real and imaginary components of respective complex values. The key thus lies with the search for a robust initial estimate.

A problem of determining the maximum likelihood estimation solution is that the optimization of the nonlinear periodogram function is highly computationally costly. A realization using the Fast Fourier transform (FFT) with zero padding is usually adopted (see [1], [2]). An accurate estimate entails heavy padding and thus intense computation.

A quantitative account of the complexity has been detailed in [2] .

Another prior art technique for frequency offset estimation is the ad hoc estimator (AHE), according to which the phases of the double correlation function of the received samples are linearly combined to minimize the mean square error in the estimation of carrier frequency offset (see [2]). The CRB can be attained at high SNRs.

However, the thresholding signal-to-noise ratio (SNR) rises substantially when the frequency offset value approaches the boundary of its range, that is, when $\Delta\beta \to 2\pi \times 0.5$.

In [4] a frequency estimator for a single complex sinusoid in complex white Gaussian noise is described.

An object of the invention is to provide an improved method for frequency offset estimation compared to prior art methods.

The object is achieved by the method for determining a frequency offset and the system for determining a frequency offset with the features according to the independent claims.

Summary of the invention

A method for determining a frequency offset from a plurality of signal values is provided, wherein a plurality of first correlation coefficients are determined from the signal values, wherein each first correlation coefficient is determined by determining the correlation between at least two of the signal values and a plurality of second correlation coefficients is determined from the plurality of first correlation coefficients, wherein each second correlation coefficient is determined by determining the correlation between at least two of the first correlation coefficients. The plurality of second correlation coefficients is linearly combined and the frequency offset is determined as the phase of the linear combination.

Further, a system for determining a frequency offset according to the method for determining a frequency offset described above are provided.

Short description of the figures

Figure 1    shows a communication system according to an embodiment of the invention.

Figure 2    shows a frequency offset estimation unit according to an embodiment of the invention.

Detailed description

Illustratively, a double correlation is carried out, the double correlation coefficients are processed by a linear filter and the phase of the output of the linear filter is used as an estimate for the frequency offset.

Simulations show that with the invention, performance almost as superior as that of the MLE (maximum likelihood estimator) can be achieved and that less sensitivity to variation in the actual amount of frequency offset when compared with the AHE (ad hoc estimator) can be achieved. The invention can be realized with a complexity comparable to that of the AHE.

The invention is for example applicable to communication systems according to WLAN 11n, WLAN 11g, WLAN 11 n, i.e. for wireless local area networks, but may also be applicable to large area communication systems such as mobile telephone communication systems. The invention can for example be used for determining the frequency offset in a communication system according to OFDM (orthogonal frequency division multiplexing).

Embodiments of the invention emerge from the dependent claims. The embodiments which are described in the context of the method for determining a frequency offset are analogously valid for the system for determining a frequency offset.

A second correlation coefficient is for example determined as the product of a first correlation coefficient and the complex conjugate of another first correlation coefficient.

The second correlation coefficients can be linearly combined by that each second correlation coefficient is multiplied by an integer, the results of these multiplications are summed and the sum is divided by a constant. The integer multiplication with double correlation terms can be efficiently implemented.

In one embodiment, the determination of the first correlation coefficients corresponds to arranging the signal values in a matrix, generating the auto-correlation matrix of the matrix and determining the first correlation coefficients as sums of elements along the diagonals of the auto-correlation matrix. In one embodiment, the signal values correspond to a plurality of short preambles.

Illustrative embodiments of the invention are explained below with reference to the drawings.

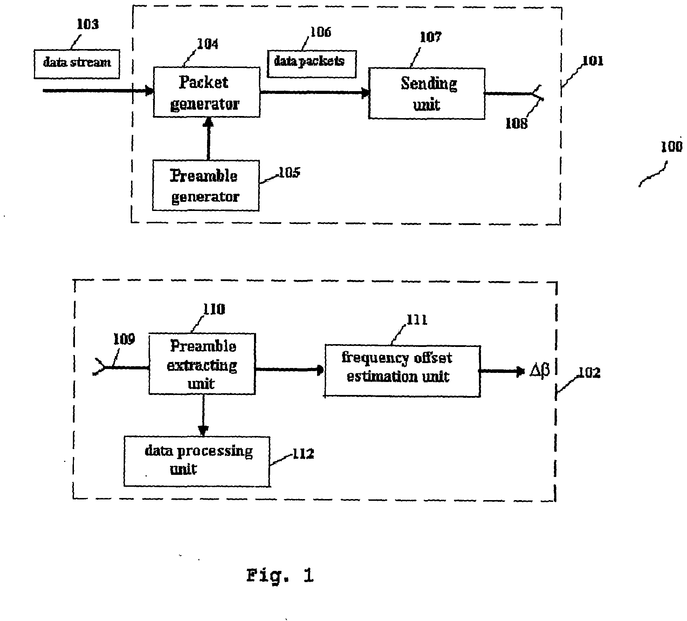

**Fig.1** shows a communication system 100 according to an embodiment of the invention.

The communication system 100 comprises a transmitter 101 and a receiver 102.

The transmitter 101 is supplied with a data stream 103 provided by some data source (not shown). The data stream 103 is fed into a packet generator 104 of the transmitter 101. The transmitter 101 further comprises a preamble generator 105 which generates preambles and supplies them to the packet generator 104.

The packet generator 104 forms data packets 106 from the data contained in the data stream 103 and puts preambles at the beginning of each data packet 106. In this embodiment, $P_s$ identical short preambles, each of L symbols in length, denoted as $x_{\tau+kLT_b} = x_\tau$, $0 \le \tau \le LT_b$, $T_b$ being the bit interval and $0 \le k \le P_s - 1$ an integer, are prepended to each data packet 106. For the IEEE802.11a specification, for instance, $P_s$=10 and L=16.

For example, according to the IEEE802.11a specification, each data packet 106 is prepended by $P_s$=10 identical short preambles, each of L=16 symbols in length.

The data packets 106 are supplied to a sending unit 107 which sends the data packets 106 using a transmit antenna 108. The sending unit 107 performs some sort of modulation, for example OFDM (orthogonal frequency division multiplexing) of at least one carrier which is sent by the sending antenna 108 to send the data packets 106. The communication system 100 may be a MIMO (multiple input multiple output) system. Accordingly, the data packets 106 may be sent using a plurality of sending antennas 108.

The data packets 106 sent by the transmitter 101 are received by the receiver 102 via a receiving antenna 109 and are supplied to a preamble extraction unit 110. The preamble extraction unit 110 forwards preamble values (explained in detail below) contained in the data packet 106 to a frequency offset estimation (FOE) unit 111 and forwards the actual data contained in the data packets 106 and corresponding to the data stream 103 to a data processing unit 112 which performs data processing, for example decodes the data and supplies the data to some data sink (not shown).

The FOE unit 111 determines a frequency offset estimation $\Delta\beta$. The frequency offset estimation $\Delta\beta$ may for example be used by the data processing unit 112 to correct errors resulting from inter carrier interference caused by the frequency offset or to perform a phase compensation.

After transmission through the channel, the $P_s$ short preambles of a data packet 106 become $z_t = at + \tilde{v}_t$, where

$$a_t = \int_{-\infty}^{\infty} h_{t-\alpha} x_\alpha \, d\alpha$$

$$= \int_{-\infty}^{\infty} h_{(t+LkTs)-(\alpha+LkTs)} x_{\alpha+LkT_b} \, d\alpha \tag{1}$$

$$= a_{t+LkT_b}$$

is periodic for $LT_b \leq t \leq 2LT_b$, with the assumption that the maximum delay spread of the channel is less than the duration of one short preamble $LT_b$ and $h_t$ is the channel gain of the radio channel between the sending antenna 108 and the receiving antenna 109 and $\tilde{v}_t$ is additive white gaussian noise (AWGN) of variance $\sigma^2$ which influences the data transmission between the transmitter 101 and the receiver 102. The difference in the frequency of the oscillator of the receiver 102 from that of the carrier used for the transmission of the data packets 106 is reflected in the received short preambles $y_t = z_t e^{j\Delta\beta t}$ as an offset of $\Delta\beta$, where $-2\pi\cdot0.5 \leq \Delta\beta \leq 2\pi\cdot0.5$.

Since the first short preamble is corrupted by intersymbol interference it is disposed of by the preamble extraction unit 110, and some of the remaining ones are reserved for other purposes such as timing synchronization, it is supposed that only $P < P_s$ received short preambles are available for frequency offset estimation. The PL discrete values $y_n$ contained in these $P$ received preambles are forwarded by the preamble extraction unit 110 to the frequency offset estimation unit 111.

The PL discrete values $y_n$ can be expressed in matrix form as

$$\underline{Y} = \underline{b}\underline{a}^H + \underline{V}, \tag{2}$$

where

$$\underline{Y} \triangleq \begin{bmatrix} y_0 & y_1 & \cdots & y_{L-1} \\ y_L & y_{L+1} & \cdots & y_{2L-1} \\ \vdots & \vdots & \ddots & \vdots \\ y_{(P-1)} & y_{(P-1)L+1} & \cdots & y_{PL-1} \end{bmatrix} \tag{3}$$

$$\underline{b} \triangleq \begin{bmatrix} 1 \\ e^{j\omega} \\ \vdots \\ e^{j\omega(P-1)} \end{bmatrix} \tag{4}$$

$$\omega \triangleq L\Delta\beta \tag{5}$$

$$\underline{a}^H \triangleq \begin{bmatrix} a_0 & a_1 e^{j\Delta\beta} & \cdots & a_{L-1} e^{j\Delta\beta(L-1)} \end{bmatrix} \tag{6}$$

$$\underline{V} \; \square \; \begin{bmatrix} v_0 & v_1 & \cdots & v_{L-1} \\ v_L & v_{L+1} & \cdots & v_{2L-1} \\ \vdots & \vdots & \ddots & \vdots \\ v_{(P-1)L} & v_{(P-1)L+1} & \cdots & v_{PL-1} \end{bmatrix} \tag{7}$$

with $v_n = \tilde{v}_n e^{j\Delta\beta n}$, n= 0, 1, ..., PL-1 sharing the same statistical properties with $\tilde{v}_n$, and can therefore be equivalently regarded as AWGN. As mentioned above, the FOE unit 111 estimates $\Delta\beta$.

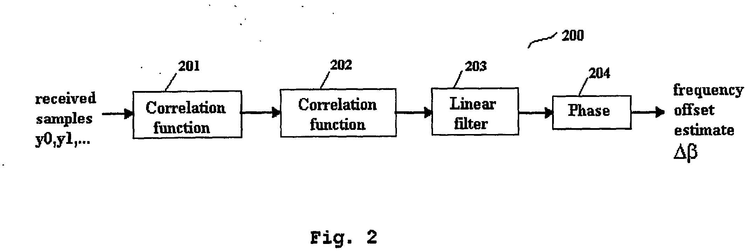

In the following, the functionality of the FOE unit 111 is explained with reference to fig. 2.

**Fig.2** shows a frequency offset estimation unit 200 according to an embodiment of the invention.

As explained above, the frequency offset estimation (FOE) unit 200 receives as input PL discrete values $y_n$ contained in the short preambles of a data block. As mentioned, the values $y_n$ may be written in matrix form as (compare equation (3))

$$\underline{Y} \; \square \; \begin{bmatrix} y_0 & y_1 & \cdots & y_{L-1} \\ y_L & y_{L+1} & \cdots & y_{2L-1} \\ \vdots & \vdots & \ddots & \vdots \\ y_{(P-1)} & y_{(P-1)L+1} & \cdots & y_{PL-1} \end{bmatrix}$$

In the absence of noise, $\underline{Y} = \underline{ba}^H$ and the correlation term $[\underline{YY}^H]_{i,i-k}$ will be equal to $(\underline{a}^H\underline{a})e^{j\omega k}$ suggesting that $e^{j\omega k}$ can be estimated from a linear combination of $[\underline{YY}^H]_{i,i-k}$ with different values of i. In turn, $\omega$ can be estimated from a separate linear combination of the products of the estimates for $e^{j\omega(k+1)}$ and $(e^{j\omega k})^*$.

Given $[\underline{YY}^H]_{i,i-k}$, i= k, k+1, ..., P-1, it can be shown that the minimum variance unbiased estimator (see [4]) of $e^{j\omega k}$ at a high signal-to-noise ratio (SNR) is $c_k/[(P-k)(\underline{a}^H\underline{a})]$, where

$$c_k \; \square \; \sum_{i=k}^{P-1} \left[ YY^H \right]_{i,i-k}, \qquad k = 0, 1, \ldots, P-1 \tag{8}$$

implying that $c_k$ is an optimal linear estimator for $e^{j\omega k}$ after scaling. Introducing the double correlation term $d_k$, defined as

$$d_k \; \square \; c_{k+1}c_k^* = (\underline{a}^H\underline{a})^2 e^{j\omega} + n_k \tag{9}$$

it can be shown that the noise component $n_k$ in $d_k$ has an autocorrelation of

$$\begin{aligned} [\underline{R}]_{k,m} \; &\square \; E(n_k n_m^*) \\ &= 2(\underline{a}^H\underline{a})^3 \sigma^2 \{ (P-k-1)(P-m-1)\left[P - \max(k, m)\right] \\ &\quad +(P-k)(P-m)\left[P - \max(k+1, m+1)\right] \\ &\quad +(P-k-1)(P-m)\left[\max(P-k-m-1, 0)\right] \\ &\quad +(P-k)(P-m-1)\left[P-k-m-1, 0\right] \} \end{aligned}$$

at high SNRs. By expressing (9) in matrix form,

$$\underline{d} \;=\; (\underline{a}^H\underline{a})^2\underline{\rho} \cdot e^{j\omega} + \underline{n} \tag{10}$$

where the kth element, k= 0, 1, ..., P-2 of the column vector $\underline{\rho}$ is $[\underline{\rho}]_k \;\square\; (P\text{-}k)\,(P\text{-}k\text{-}1)$, the minimum variance unbiased estimator (see [4]) of $\lambda \;\square\; e^{j\omega}$, which minimizes the cost function

$$\left[\underline{d} - (\underline{a}^H\underline{a})^2\underline{\rho}\cdot e^{j\omega}\right]^H \underline{R}^{-1} \left[\underline{d} - (\underline{a}^H\underline{a})^2\underline{\rho}\cdot e^{j\omega}\right] \tag{11}$$

is

$$\hat{\lambda}_{ODC} \;=\; \frac{1}{(\underline{a}^H\underline{a})^2} \cdot \frac{\underline{\rho}^T\underline{R}^{-1}\underline{d}}{\underline{\rho}^T\underline{R}^{-1}\underline{\rho}} \cdot \tag{12}$$

The frequency of interest $\omega$ can then be estimated as

$$\hat{\omega}_{ODC} \;=\; \angle\left[\frac{1}{(\underline{a}^H\underline{a})^2} \cdot \frac{\underline{\rho}^T\underline{R}^{-1}\underline{d}}{\underline{\rho}^T\underline{R}^{-1}\underline{\rho}}\right] \;=\; \angle(\underline{\rho}^T\underline{R}^{-1}\underline{d}) \tag{13}$$

since $(a^Ha)^2(\rho^TR^{-1}\rho)$ is real.
An attempt to obtain

$$\underline{g} \;=\; \underline{R}^{-1}\underline{\rho} \tag{14}$$

as required by (13) is made by assuming that the elements in g can be described by a polynomial. Numerical results support the supposition and reveal that the polynomial is linear, i.e., $\underline{R}[1 \quad \underline{t}][\mu_0 \quad \mu_1]^T = \rho$ where $\underline{t} = [0\ 1\ 2\ \cdots\ P\text{-}2]^T$ and $\mu_0, \mu_1$ are coefficients to be determined. Expanding the equation and comparing terms leads to

$$\begin{bmatrix}\mu_0 \\ \mu_1\end{bmatrix} \;=\; \frac{1}{2\left(\underline{a}^H\underline{a}\right)^3\sigma^2} \cdot \frac{6}{P\left(4P^2 - 1\right)}\begin{bmatrix}1 \\ 2\end{bmatrix} \tag{15}$$

implying that, after some algebraic manipulations,

$$\left[\underline{R}^{-1}\underline{1}\right]_k \;=\; \left[\underline{g}\right]_k \;=\; \mu_0 + \mu_1 k$$

$$=\; \frac{1}{2\left(\underline{a}^H\underline{a}\right)^3\sigma^2} \cdot \frac{6\left(2k + 1\right)}{P\left(4P^2 - 1\right)} \tag{16}$$

Back substitution with (10) and (16) verify that

$$\sum_{m=0}^{P-1} [\underline{R}]_{k,m} [\underline{g}]_m = (P - k)(P - k - 1), \forall k = 0, 1, \ldots, P - 2.$$ It follows from (13) and (16) that

$$\hat{\omega}_{ODC} = \angle \left( \underline{g}^T \underline{d} \right)$$
$$= \angle \sum_{k=0}^{P-2} (2k + 1) d_k \qquad (17)$$

Accordingly, the frequency offset estimator 200 estimates $\Delta\beta$ according to

$$\Delta\beta = \frac{\hat{\omega}_{ODC}}{L} \approx \frac{\angle \sum_{k=0}^{P-2} (2k + 1) d_k}{L}$$

The signal values $y_n$ are therefore fed to a first correlation unit 201 which determines the

$$c_k \; \square \; \sum_{i=k}^{P-1} \left[ YY^H \right]_{i,i-k,} \qquad k = 0, 1, \ldots, P - 1.$$

The $c_k$ are fed to a second correlation unit 202 which determines the

$$d_k = c_{k+1} c_k^*$$

The $d_k$ are fed to a linear filter 203 which calculates

$$\sum_{k=0}^{P-2} (2k + 1) d_k.$$

The result of this calculation is supplied to a phase determination unit which determines the phase of this result and divides it by L, i.e., determines

$$\Delta\beta = \frac{\angle \sum_{k=0}^{P-2} (2k + 1) d_k}{L}$$

which is the output of the frequency offset estimation unit 200.
In contrast to the ad hoc estimator (AHE) reported in [2], given by

$$\hat{\omega}_{AHE} = \sum_{k=0}^{M-1} 3 \frac{(P-k-1)(P-k) - M(P-M)}{M\left(4M^2 - 6PM + 3P^2 - 1\right)} \angle d_k \qquad (18)$$

with M=P/2, which allocates weights to the phase of the double correlation terms, the proposed strategy filters the double correlation terms before the phase is taken. From (17) and (18), it is obvious that the ODC (optimal double correlation) filter as used in this embodiment is of a similar order of complexity to that of the AHE (ad hoc estimator), which has been shown in [2] to be substantially lower than that of the MLE realized using FFT (Fast Fourier transformation). Further, the ODC filter adopts weights of integer values. Therefore a simple hardware implementation is possible.

The above derivation seeks to minimize the variance in the estimation of $\lambda \; \square \; e^{j\omega}$, although the ultimate objective is to minimize that in $\omega$. In the following, the performance of the proposed filter is studied by first relating these two criterion.

Consider the complex quantity $\psi = Ae^{j\theta}$. Taking the differential of $\psi$ gives $\Delta\psi = e^{j\theta}\Delta A + jAe^{j\theta}\Delta\theta$ and

$$\begin{aligned} |\Delta\psi|^2 &= \left(e^{j\theta}\Delta A + jAe^{j\theta}\Delta\theta\right)^* \left(e^{j\theta}\Delta A + jAe^{j\theta}\Delta\theta\right) \\ &= (\Delta A)^2 + A^2(\Delta\theta)^2 \end{aligned} \qquad (19)$$

where (.)* stands for conjugate operation. By writing $A = (\psi^*\psi)^{\frac{1}{2}}$, $\Delta A$ becomes

$$\Delta A = \frac{\psi^*(\Delta\psi) + \left(\Delta\psi^*\right)\psi}{2A} \qquad (20)$$

Substituting (20) into (19) and rearranging yields

$$(\Delta\theta)^2 = \left(\frac{1}{A^2} - \frac{|\psi|^2}{2A^4}\right)|\Delta\psi|^2 - \frac{\left[\psi^*(\Delta\psi)\right]^2 + \left[(\Delta\psi)^*\psi\right]^2}{4A} . \qquad (21)$$

Applying the result in (21) to the estimation of $\lambda$ by (12) calls for the substitutions $\psi = \lambda = e^{j\omega}$, $A = 1$, and $\theta = \omega$ to produce

$$(\Delta\omega_{ODC})^2 = \frac{|\Delta\lambda_{ODC}|^2}{2} - \frac{\left[e^{-j\omega}(\Delta\lambda_{ODC})\right]^2 + \left[e^{j\omega}(\Delta\lambda_{ODC})^*\right]^2}{4} \qquad (22)$$

Now substituting (10) into (12) leads to

$$\Delta\lambda_{ODC} = \hat{\lambda}_{ODC} - e^{j\omega} = \frac{1}{\left(\underline{a}^H\underline{a}\right)^2} \cdot \frac{\underline{\rho}^T\underline{R}^{-1}\underline{n}}{\underline{\rho}^T\underline{R}^{-1}\underline{\rho}} = \frac{1}{\left(\underline{a}^H\underline{a}\right)^2} \cdot \frac{\underline{g}^T\underline{n}}{\underline{g}^T\underline{\rho}} \qquad (23)$$

as $E(\underline{nn}^H) = \underline{R}$ and with $\underline{g}$ given in (16), and therefore,

$$E\left(\left|\Delta\lambda_{ODC}\right|^2\right) = \frac{1}{\left(\underline{a}^H\underline{a}\right)^4\left(\underline{g}^T\underline{\rho}\right)}$$

$$E\left[e^{-j\omega}\left(\Delta\lambda_{ODC}\right)\right]^2 = \frac{E\left[e^{-j\omega2}\left(\underline{g}^T\underline{n}\right)^2\right]}{\left[\left(\underline{a}^H\underline{a}\right)^2\underline{g}^T\underline{\rho}\right]^2} \qquad (24)$$

$$E\left[e^{j\omega}\left(\Delta\lambda_{ODC}\right)^*\right]^2 \frac{E\left[e^{j\omega2}\left(\underline{n}^H\underline{g}\right)^2\right]}{\left[\left(\underline{a}^H\underline{a}\right)^2\underline{g}^T\underline{\rho}\right]^2}$$

It can be shown that

$$E\left[e^{-j\omega2}\left(\underline{g}^T\underline{n}\right)^2\right] = E\left[e^{j\omega2}\left(\underline{n}^H\underline{g}\right)^2\right] = \frac{P\left(P^2 - 1\right)\left(4P^2 - 7\right)}{2\left(\underline{a}^H\underline{a}\right)^3\sigma^2\left(4P^2 - 1\right)^2} \qquad (25)$$

Substituting (24) and (25) into the expectation of (22), and using the result

$$\underline{g}^T\underline{\rho} = \sum_{k=0}^{P-2} g_k\left(P - k\right)\left(P - k - 1\right) = \frac{1}{2\left(\underline{a}^H\underline{a}\right)^3\sigma^2} \cdot \frac{P\left(P^2 - 1\right)}{4P^2 - 1} \qquad (26)$$

yield the mean squared error

$$MSE\left(\omega_{ODC}\right) = E\left[\left(\Delta\omega_{ODC}\right)^2\right] = \frac{6}{\frac{\underline{a}^H\underline{a}}{\sigma^2}P\left(P^2 - 1\right)} = CRB\left(\omega\right) \qquad (27)$$

which is the Cramer-Rao bound (CRB) for the estimation of $\omega$ (see [2]), indicating that the proposed double correlation filter achieves optimal performance at high SNRs. The corresponding MSE in the frequency offset $\Delta\beta = \omega/L$ as related in (3) is therefore

$$MSE\left(\Delta\beta_{ODC}\right) = \frac{6}{SNR \cdot P\left(P^2 - 1\right) \cdot L^3} = CRB\left(\Delta\beta\right) \qquad (28)$$

where SNR=$(\underline{a}^H\underline{a})/(L\sigma^2)$ quantifies the signal-to-noise ratio in short preambles.

Simulations show that the mean squared error (MSE) of the carrier frequency offset estimate at a high signal-to-noise ratio equals to the Cramer-Rao bound (CRB) for the estimation of $\Delta\beta$. This indicates optimal performance at high SNRs. The Almost as good a performance as with MLE (maximum likelihood estimation) can be achieved and an improvement in robustness to variation in the actual carrier frequency offset value over the AHE is provided. The FOE unit 200 (also denoted as ODC filter) has a low computational complexity comparable to that of the AHE (ad hoc estimator), which in turn has been shown in [2] to be significantly lower that that of the MLE realized using FFT.

The computationaly intensity of the FOE unit 200 is shown in Table 1.

Table 1

|  | Multiplication | Addition |
|---|---|---|
| $\underline{Y}\ \underline{Y}^H$ | LP(P+1)/2 | (L-1)P(P+1)/2 |
| $\underline{C}_k$ | 0 | P (P-1) /2 |
| $\underline{d}_k$ | P-1 | 0 |

The computational intensity for subsequent operations, compared to the ad-hoc estimator according to prior art is illustrated in Table 2

Table 2

|  | Ad-hoc estimator | Optimal double correlator |
|---|---|---|
| Phase computation | P/2 | 1 |
| Multiplications | P/2 (floating point mult) | P-1 (simple integer mult) |
| Additions | P/2-1 | P-2 |

Further, using the invention, e.g. the embodiment described above, a relaxation of specification in local receiver oscillator frequency offset can be achieved. For example, the current specification for IEEE802.11a is 20ppm (parts per million) in the transmitter and the receiver, which, for a system of carrier and sampling frequencies of 5GHz and 20MHz respectively, translates to a maximum digital frequency offset of

$$\omega = 20 \times 10^{-6} \times \frac{5 \times 10^9}{20 \times 10^6} \times 2 = 0.01\mathrm{Hz}$$

$$\Delta\beta = \omega L = 0.16\mathrm{Hz}$$

With the above embodiment, the tolerance can reach as high as to 0.45Hz, as can be demonstrated through simulation at SNR=0dB, which equivalently eases the oscillator accuracy from 20ppm to

$$20 \times 0.45 / 0.16 = 56\mathrm{ppm}$$

by more than 2.5 times.

In this document, the following publications are cited:

[1] J. Li, G. Liu, and G. B. Giannakis, "Carrier frequency offset estimation for OFDM-Based WLANs", IEEE Signal Processing Letters, pp. 80-82, vol. 8, no. 3, Mar. 2001

[2] M. Morelli and U. Mengali, "Carrier-frequency estimation for transmissions over selective channels", IEEE Transactions on Communications, pp. 1580-1589, vol. 48, no. 9, Sept. 2000

[3] J. Lei and T-S. Ng, "Periodogram-based carrier frequency offset estimation for orthogonal frequency division multiplexing applications", IEEE Global Telecommunications Conference, GLOBECOM '01, pp. 3070-3074, vol. 5, 2001

[4] S. Kay, "Statistically/Computationally efficient frequency estimation", ICASSP'98, pp. 2292-2294, vol.4, 1998

**Claims**

1. Method for determining a frequency offset from a plurality of signal values, wherein

   - a plurality of first correlation coefficients are determined from the signal values, wherein each first correlation coefficient is determined by determining the autocorrelation between at least two of the signal values;
   - a plurality of second correlation coefficients is determined from the plurality of first correlation coefficients, wherein each second correlation coefficient is determined by determining the autocorrelation between at least two of the first correlation coefficients;
   - the plurality of second correlation coefficients is linearly combined;
   - the frequency offset is determined as the phase of the linear combination.

2. Method according to claim 1, wherein the second correlation coefficients are linearly combined by that each second correlation coefficient is multiplied by an integer, the results of these multiplications are summed and the sum is divided by a constant.

3. Method according to claim 1 or 2, wherein the determination of the first correlation coefficients corresponds to arranging the signal values in a matrix, generating the auto-correlation matrix of the matrix and determining the first correlation coefficients as sums of elements along the diagonals of the auto-correlation matrix.

4. Method according to any one of claims 1 to 3, wherein the signal values correspond to a plurality of short preambles.

5. System for determining a frequency offset from a plurality of signal values (111, 200), the system comprising

   - a first correlation unit (201), adapted to determine a plurality of first correlation coefficients from the signal values, wherein each first correlation coefficient is determined by determining the autocorrelation between at least two of the signal values;
   - a second correlation unit (202), adapted to determine a plurality of second correlation coefficients from the plurality of first correlation coefficients, wherein each second correlation coefficient is determined by determining the autocorrelation between at least two of the first correlation coefficients;
   - a combiner (203), adapted to linearly combine the plurality of second correlation coefficients;
   - a phase determination unit (204) adapted to determine the frequency offset as the phase of the linear combination.

**Patentansprüche**

1. Verfahren zum Ermitteln eines Frequenzversatzes aus einer Mehrzahl von Signalwerten, bei dem

   - eine Mehrzahl von ersten Korrelationskoeffizienten aus den Signalwerten ermittelt wird, wobei jeder erste Korrelationskoeffizient ermittelt wird durch Ermitteln der Autokorrelation zwischen mindestens zwei der Signalwerte;
   - eine Mehrzahl von zweiten Korrelationskoeffizienten aus der Mehrzahl von ersten Korrelationskoeffizienten ermittelt wird, wobei jeder zweite Korrelationskoeffizient durch Ermitteln der Autokorrelation zwischen mindestens zwei der ersten Korrelationskoeffizienten ermittelt wird;
   - die Mehrzahl von zweiten Korrelationskoeffizienten linear kombiniert wird;
   - der Frequenzversatz als die Phase der Linearkombination ermittelt wird.

2. Verfahren gemäß Anspruch 1, wobei die zweiten Korrelationskoeffizienten linear kombiniert werden, indem jeder zweite Korrelationskoeffizient mit einer ganzen Zahl multipliziert wird, die Ergebnisse dieser Multiplikationen summiert werden und die Summe durch einen Konstante geteilt wird.

3. Verfahren gemäß Anspruch 1 oder 2, wobei die Ermittlung der ersten Korrelationskoeffizienten dem Anordnen der Signalwerte in einer Matrix, dem Erzeugen der Autokorrelationsmatrix der Matrix und dem Ermitteln der ersten Korrelationskoeffizienten als Summe der Elemente entlang der Diagonalen der Autokorrelationsmatrix entspricht.

4. Verfahren gemäß einem der Ansprüche 1 bis 3, wobei die Signalwerte einer Mehrzahl von kurzen Präamblen entsprechen.

5. System zum Ermitteln eines Frequenzversatzes aus einer Mehrzahl von Signalwerten (111, 200), wobei das System aufweist:

- eine erste Korrelationseinheit (201), die eingerichtet ist, eine Mehrzahl von ersten Korrelationskoeffizienten aus den signalwerten zu ermitteln, wobei jeder erste Korrelationskoeffizient ermittelt wird durch Ermitteln der Autokorrelation zwischen mindestens zwei der Signalwerte;
- eine zweite Korrelationseinheit (202), die eingerichtet ist, eine Mehrzahl von zweiten Korrelationskoeffizienten aus der Mehrzahl von ersten Korrelationskoeffizienten zu ermitteln, wobei jeder zweite Korrelationskoeffizient durch Ermitteln der Autokorrelation zwischen mindestens zwei der ersten Korrelationskoeffizienten ermittelt wird;
- ein Kombinierer (203), der eingerichtet ist, die Mehrzahl von zweiten Korrelationskoeffizienten linear zu kombinieren;
- eine Phasenermittlungseinheit (204), die eingerichtet ist, den Frequenzversatz als die Phase der Linearkombination zu ermitteln.

**Revendications**

1. Procédé pour la détermination d'un décalage de fréquence d'une pluralité de valeurs de signal, dans lequel :

une pluralité de premiers coefficients de corrélation sont déterminés à partir des valeurs de signal, où chaque premier coefficient de corrélation est déterminé en déterminant l'autocorrélation entre au moins deux des valeurs de signal ;
une pluralité de seconds coefficients de corrélation sont déterminés à partir de la pluralité de premiers coefficients de corrélation, où chaque second coefficient de corrélation est déterminé en déterminant l'autocorrélation entre au moins deux des premiers coefficients de corrélation ;
la pluralité de seconds coefficients de corrélation sont combinés linéairement ;
le décalage de fréquence est déterminé en tant que phase de la combinaison linéaire.

2. Procédé selon la revendication 1, dans lequel les seconds coefficients de corrélation sont combinés linéairement en ce que chaque second coefficient de corrélation est multiplié par: un entier ; les résultats de ces multiplications sont additionnés et la somme est divisée par une constante.

3. Procédé selon la revendication 1 ou la revendication 2, dans lequel la détermination des premiers coefficients de corrélation correspond à l'arrangement des valeurs de signal dans une matrice, à la génération de la matrice d'autocorrélation de la matrice et à la détermination des premiers coefficients de corrélation en tant que sommes des éléments de la diagonale de la matrice d'autocorrélation.

4. Procédé selon l'une quelconque des revendications 1 à 3, dans lequel les valeurs de signal correspondent à une pluralité de courts préambules.

5. Système pour la détermination d'un décalage de fréquence d'une pluralité de valeurs de signal (111, 200), le système comprenant :

une première unité de corrélation (201) adaptée pour déterminer une pluralité de premiers coefficients de corrélation à partir des valeurs de signal, où chaque premier coefficient de corrélation est déterminé en déterminant l'autocorrélation entre au moins deux des valeurs de signal ;
une seconde unité de corrélation (202) adaptée pour déterminer une pluralité de seconds coefficients de corrélation à partir de la pluralité de premiers coefficients de corrélation, où chaque second coefficient de corrélation est déterminé en déterminant l'autocorrélation entre au moins deux des premiers coefficients de corrélation ;
un combinateur (203) adapté pour combiner linéairement la pluralité de seconds coefficients de corrélation ;

une unité de détermination de phase (204) adaptée pour déterminer le décalage de fréquence en tant que phase de la combinaison linéaire.

Fig. 1

Fig. 2

**EP 1 776 796 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MORELLI M. ; MENGALI U.** Carrier-Frequency Estimation for Transmissions over Selective Channels. *IEEE Transactions on Communications,* September 2000, vol. 48 (9), 1580-1589
- **J. LI ; G. LIU ; G. B. GIANNAKIS.** Carrier frequency offset estimation for OFDM-Based WLANs. *IEEE Signal Processing Letters,* March 2001, vol. 8 (3), 80-82
- **M. MORELLI ; U. MENGALI.** Carrier-frequency estimation for transmissions over selective channels. *IEEE Transactions on Communications,* September 2000, vol. 48 (9), 1580-1589
- **J. LEI ; T-S. NG.** Periodogram-based carrier frequency offset estimation for orthogonal frequency division multiplexing applications. *IEEE Global Telecommunications Conference, GLOBECOM '01,* 2001, vol. 5, 3070-3074
- **S. KAY.** Statistically/Computationally efficient frequency estimation. *ICASSP'98,* 1998, vol. 4, 2292-2294